# EUROPEAN PATENT APPLICATION

(11) **EP 2 868 189 A1**
(43) Date of publication of application: **06.05.2015**
(21) Application number: 13191391.5
(22) Date of filing: 04.11.2013
(51) Int. Cl.: A01G 5/00, A01G 5/02

(54) **Apparatus for removing leaves from the stems of cut flowers**

(71) Applicant: Bercomex B.V., 1624 PB Hoorn (NL)
(72) Inventor: Ruijter, Bram, 1676 GS TWISK (NL)
(74) Representative: De Vries & Metman

(57) **Abstract**

An apparatus is provided for removing leaves (1) from the stems (2) of cut flowers. It comprises a conveyor belt (3) having a conveying direction (4) for conveying the cut flowers in a position in which the stems extend transversely beyond the conveyor belt (3) and deleafing means (6)positioned next to the conveyor belt (3) for engaging the stems for removing the leaves there from. The deleafing means (6) comprise deleafing members moving along endless tracks in first planes extending substantially perpendicularly to a second plane defined by the conveyor belt and the stems (2) of the cut flowers. As seen in a direction perpendicularly to the second plane, the angle between said first planes and the stems lies in a range from 0° to 20°.

## Description

The invention relates to an apparatus for removing leaves from the stems of cut flowers, comprising a conveyor belt having a conveying direction for conveying the cut flowers in a position in which the stems extend transversely beyond the conveyor belt, and deleafing means positioned next to the conveyor belt for engaging the stems for removing the leaves there from, which deleafing means comprise deleafing members moving along endless tracks in first planes extending substantially perpendicularly to a second plane defined by the conveyor belt and the stems of the cut flowers.

Before discussing the invention, the following is noted. Within the context of the present invention, the word "stem" not only intends to indicate separate stems of cut flowers, but also is used for a bundle of stems (because in the field of processing cut flowers, such cut flowers often are gathered into bundles comprising a particular number of cut flowers). Thus, when in the following description reference is made to certain properties of the stems (for example the direction into which a stem extends), this property, when related to a bundle of stems, is based upon an average of said property of all separate stems belonging to said bundle.

In a known apparatus of the above mentioned type the deleafing means are positioned such that the first planes in which the deleafing members move include a rather large angle (for example 45°) with the (longitudinal direction of the) stems (as seen in a direction perpendicularly to the second plane). Such a positioning of the deleafing means, however, has a number of drawbacks. Because of the mentioned angle between the first planes and the stems the force of the deleafing members generated on the stems has a component transversely to the stems as a result of which the stems are bent. This bending effect increases with an increase of the length of the stems from which the leaves are removed and there is a large risk of breakage of the stems (as a result of which the cut flowers become worthless). This effect is increased by the fact that the stems, due to said angle, also experience a substantial amount of resistance while passing through the deleafing means (in the conveying direction).

Thus it is an object of the present invention to provide an improved apparatus of the above type.

In accordance with the present invention the apparatus is **characterized in that**, as seen in a direction perpendicularly to the second plane, the angle between said first planes and the stems lies in a range from 0° to 20°.

Such a small angle leads to surprising results. The force on the stems generated by the deleafing members extends more in the longitudinal (axial) direction of the stems, compared with the state of the art apparatus, and this leads to lesser bending of the stems and thus a smaller risk of breakage. In case of a bundle of cut flowers the shape of the bundle is better maintained, leading to a more favourable (esthetical) appearance of the bundle. Further, the resistance experienced by the stems while passing the deleafing means is reduced, also reducing the power need of the apparatus. Moreover it appears that the removal of the leaves is improved, probably because the deleafing members in a more favourable manner engage the leaves (more axially at the interface between leaf and stem).

In one embodiment of the apparatus according to the present invention said angle lies in a range from 10° to 20° or a range from 0° to 10°.

In another embodiment of the apparatus according to the present invention said angle is substantially zero. This means that the first planes substantially extend in parallel to the stems.

Theoretically, however, such an angle of substantially zero only would result in substantially no transversal forces on the stems when there is no relative movement in the conveying direction between the stems and the deleafing means. When such a relative movement occurs (as will always be the case), it will generate a drag force on the stems acting in a direction which does not coincide with the longitudinal direction of the stems (and thus again causing bending thereof).

Thus, in another embodiment of the apparatus according to the present invention said angle is such that the component in the conveying direction of the deleafing force which is generated on the stems by the deleafing members and which extends in said first planes substantially is compensated by a drag force on the stems generated by the deleafing members due to the movement of the stems relative to the deleafing members in the conveying direction of the conveyor belt. This means that the said component of the deleafing force and the drag force substantially have the same magnitude, but are directed in opposite directions.

Although it is possible that the cut flowers are conveyed by the conveyor belt in any of many positions (for example with the stems inclined or even hanging down), in a favourable embodiment the conveyor belt extends horizontally, wherein the stems of the cut flowers extend horizontally and wherein said first planes extend vertically.

Further it has advantages when the apparatus is devised for conveying the cut flowers with the stems extending substantially perpendicularly to the conveying direction of the conveyor belt (this generally means perpendicularly to the conveyor belt). One of the advantages is that in such a manner the space between the stems and the conveyor belt is maximised for the application of the deleafing means.

The deleafing means may comprise at least one pair of counter rotating shafts which carry the deleafing members for engaging the stems. The pair will receive the stems there between and this results in symmetrical forces on the stems. Depending on the circumstances (for example nature of the stem or bundle of stems) there also may be provided two or more adjacent pairs of counter rotating shafts. The shafts may or may not be synchronised.

In another embodiment the deleafing means comprise at least one pair of counter rotating belts each defining an elongated track and carrying the deleafing members for engaging the stems. Again, the stems are received between the belts (specifically the belt parts facing each other).

The deleafing members may be brushes, flexible fingers (for example made of rubber) or may have any other shape for effectively grasping and removing the leaves without damaging the stems. Such brushes, fingers or alike may be positioned on the shafts or belts in any desired pattern (for example along a spiral).

The shafts (of a pair of shafts) or elongated tracks (of a pair of belts) may extend in parallel to each other (keeping the distance there between and with respect to the stems constant in the conveying direction).

In yet another embodiment of the apparatus, however, the shafts or elongated tracks, as seen in a horizontal direction perpendicularly to the conveying direction of the conveyor belt, include an angle in a range from 5° to 15°. Preferably, said angle is at most 10°. As a result the distance between the cooperating shafts or tracks at the beginning is large (allowing an easy introduction of the stems there between) and decreases in the conveying direction (leading to a gradual engagement of the deleafing members on the stems). Also, the larger distance at the beginning offers plenty of room for the provision of driving means for the shafts or belts without hindering the passage of the stems.

In a specific embodiment of the apparatus according to the present invention, the deleafing means are movable to and fro in a direction substantially in parallel to the stems. This allows to increase (and set) the length of the stems which has to be freed from the leaves (for example up to 500 mm, which is far more than possible with the state of the art apparatus).

For example, the deleafing means may be movable to and fro along a guide, which generally will extend along a straight line (but which also may have a slight curvature). As an alternative the deleafing means may be movable to and fro by means of a four-link mechanism, such as for example a parallelogram linkage (in which case the trajectory of the deleafing means indeed is a curved line).

Hereinafter the invention will be elucidated while referring to the drawing in which:
Figure 1 schematically and in a perspective view shows a first embodiment of the apparatus according to the invention;
Figure 2 shows a detail of the apparatus of figure 1 on a larger scale;
Figure 3 shows a view according to III in figure 1;
Figure 4 illustrates forces acting on a stem;
Figure 5 shows a detail of an alternative embodiment of the deleafing means;
Figure 6 shows a detail of another alternative embodiment of the deleafing means;
Figure 7 shows an embodiment of the apparatus with movable deleafing means;
Figure 8 shows another embodiment of the apparatus with movable deleafing means, and
Figure 9 shows a view according to IX in figure 4 of yet another embodiment.

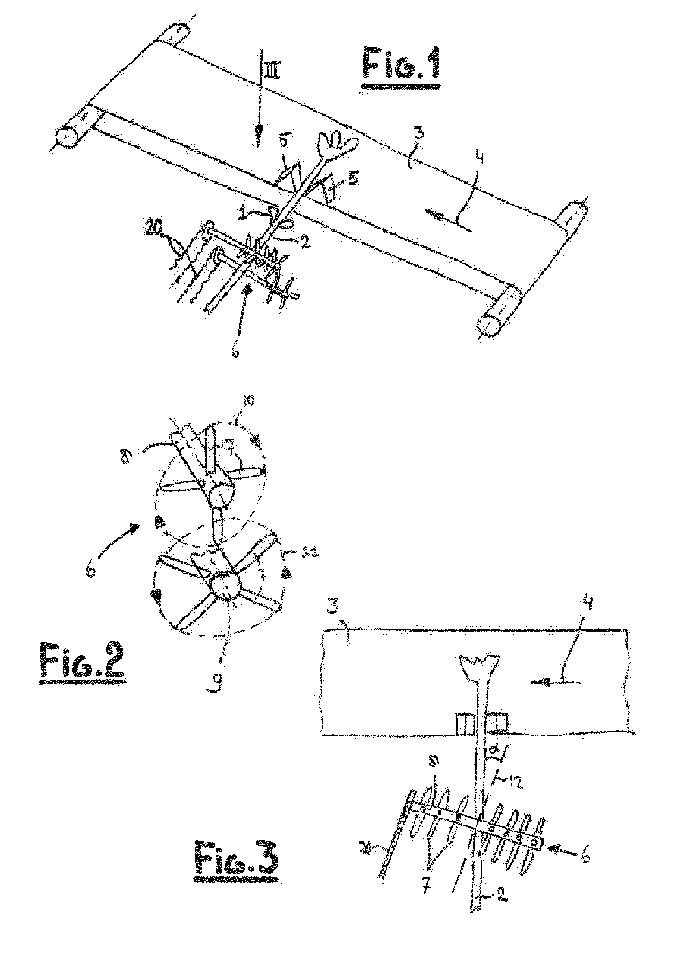

Firstly referring to figure 1, an apparatus for removing leaves 1 from the stems 2 of cut flowers (or from a bundle of cut flowers) comprises a conveyor belt 3 having a conveying direction 4. The conveyor belt 3 is devised for conveying the cut flowers in a position in which the stems 2 extend transversely beyond the conveyor belt 3. Figure 1 schematically shows positioning members 5 applied on the conveyor belt 3 which may be used to keep the cut flowers (and especially the stems 2 thereof) in a correct position on and relative to the conveyor belt 3 and thus in a correct position relative to deleafing means to be described below. Apart from the positioning members 5 also additional means (not illustrated) may be applied for this goal, such as a pressure belt moving with the same speed as the conveyor belt 3 and pressing the cut flowers on the conveyor belt 3 or support means for supporting the stems 2 and guiding these in a correct manner towards the deleafing means. For a correct understanding of the present invention such additional means are not essential and thus have not been shown.

The apparatus further comprises deleafing means 6 positioned next to the conveyor belt 3 for engaging the stems 2 for removing the leaves 1 there from. The number of deleafing means may differ from what has been illustrated. As better illustrated in figure 2 said deleafing means 6 comprise deleafing members 7 (for example brushes or flexible fingers made of rubber or another resilient material) attached to a pair of counter rotating parallel shafts 8,9 (for example driven by toothed belts 20, see figures 1 and 3). As a result of the rotation of said shafts 8,9 the deleafing members move along endless tracks 10,11 in first planes extending substantially perpendicularly to a second plane which is defined by the conveyor belt 3 and the stems 2 of the cut flowers.

In accordance with the present invention and referring to figure 3 which shows a view (according to III in figure 1) in a direction perpendicularly to the second plane, the angle α between said first planes (in figure 3 indicated by a dotted line 12) and the stems 2 is at most 20° (and in some instances even at most 10° or 5°). This angle even might be zero. This is far less than in a conventional apparatus in which such an angle may be as large as 45°. By using such a smaller angle, bending stresses in, and the risk of breakage of the stems may be reduced dramatically. Further it appears that the shape of the (bundle of) cut flowers is maintained better, yielding a more valuable product. Also, a better removal of the leaves may result, wile the movement of the stems through the deleafing means results in less resistance.

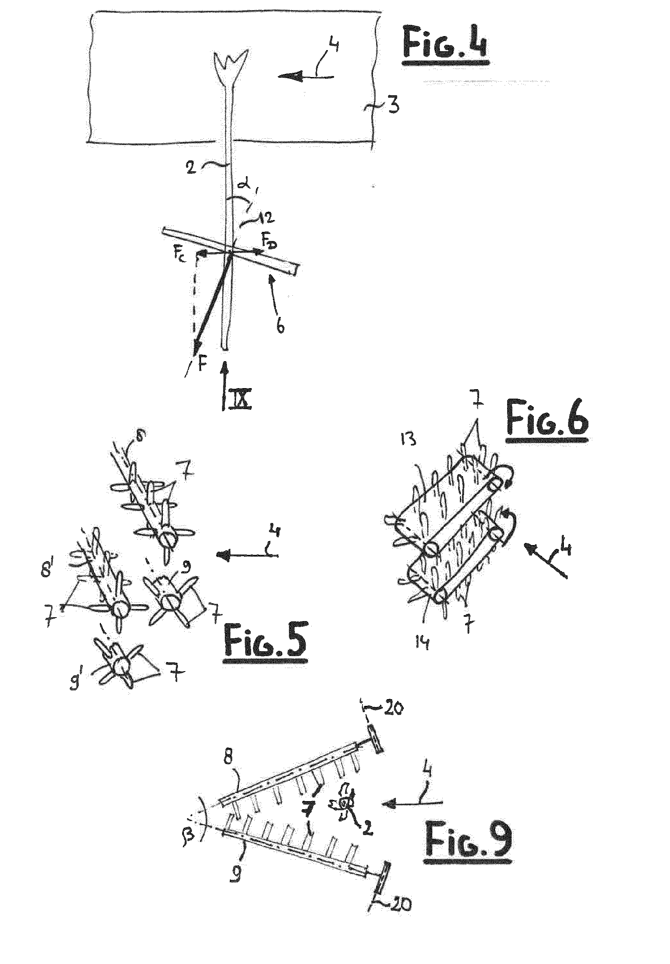

Preferably said angle α is such (see figure 4) that the component Fc in the conveying direction 4 of the deleafing force F (which acts in the direction of the first planes 12) which is generated on the stems 2 by the deleafing members of the deleafing means 6, substantially is compensated by a drag force F_{D} on the stems 2 generated by the deleafing members due to the movement of the stems relative to the deleafing members in the conveying direction 4 of the conveyor belt 3. This minimises bending stresses on the stems 2. The exact choice of such an angle may be hard to predict (and may depend on the nature of the stems or bundle of stems and thus the specific variety of the cut flowers) and in some instances may need some trial and error to obtain an optimal value.

In the illustrated embodiment of the apparatus the conveyor belt 3 extends horizontally, wherein the stems 2 of the cut flowers extend horizontally while said first planes 12 extend vertically. This, however, is not necessary. Further, in the illustrated embodiment, the stems 2 extend substantially perpendicularly to the conveying direction 4 of the conveyor belt 3, but this also is not necessary, although it maximises the available space for the provision of the deleafing means 6.

As illustrated in the embodiment of figures 1 and 2 the deleafing means 6 comprise one pair of counter rotating parallel shafts 8,9 which carry the deleafing members 7 for engaging the stems 2. The deleafing members 7 on the shafts 8,9 may have a staggered position such that they may protrude into each others trajectory or endless tracks 10, 11 without interfering with each other. As illustrated in figure 5, it is also conceivable to use two (or more) adjacent pairs of counter rotating parallel shafts 8,9 and 8',9'.

As an alternative (see figure 6) the deleafing means 6 comprise at least one pair of counter rotating belts 13,14 each defining an elongated track and carrying the deleafing members 7 for engaging the stems 2.

The shafts 8,9 of a pair or belts 13,14 of a pair may or may not be synchronised.

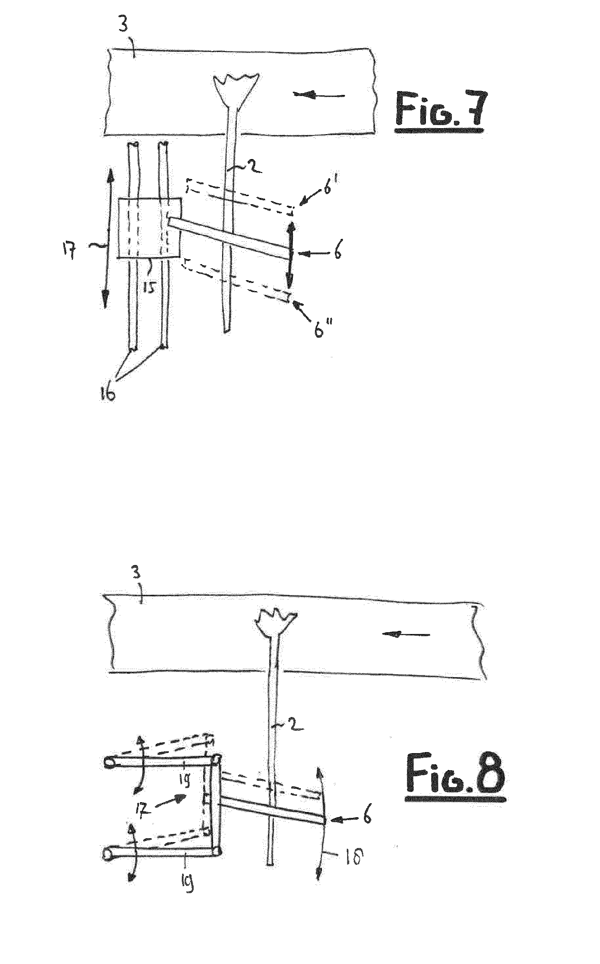

Figures 7 and 8 show two alternative embodiments of the apparatus according to the invention according to which the deleafing means 6 are movable to and fro in a direction substantially in parallel to the stems 2.

In the embodiment according to figure 7 the deleafing means 6 are movable to and fro along a guide mechanism (here comprising a slide 15 supporting the deleafing means 6 and two guide rails 16 along which the slide can move; a drive mechanism for realising the to and fro movement 17 of the slide has not been illustrated but will be synchronised with the movement of the conveyor belt 3). Two extreme positions 6' and 6" of the deleafing means have been illustrated and the distance there between is related to the length of the stems 2 which will be freed from the leaves 1.

In the embodiment according to figure 7 the deleafing means 6 are movable to and fro by means of a four-link mechanism, such as for example a parallelogram linkage 17. Strictly, now the deleafing means move along a curve 18, but depending on the length of the two parallel links 19 this curve will approximate a straight line (as long as the links 19 only rotate over moderate angles).

It is noted, however, that also other mechanisms and structures are conceivable for moving the deleafing means 6 to and fro along the stems 2 (this means in the longitudinal direction of the stems).

Whereas in the embodiments described before the shafts 8,9 of a pair or the belts 13, 14 of a pair extend in parallel to each other (that means that the distance there between remains constant in the conveying direction 4), figure 9 illustrates an embodiment with two shafts 8,9 which, as seen in a horizontal direction (in accordance with IX in figure 4) perpendicularly to the conveying direction 4 of the conveyor belt 3, include an angle β in a range from 5° to 15°, preferably at most 10°. As a result stems 2 may be introduced gently between the shafts 8,9 (or, in a corresponding manner, between cooperating belts), whereas also driving means (such as toothed belts 20) may engage the shafts 8,9 without obstructing the stems 2. The shafts 8,9, in most cases then, will be supported only near to these drive means and will be cantilevered at the opposite end.

At the wider end (right in figure 9) the deleafing members 7 may be spaced from each other, whereas at the narrower end (left in figure 9) they may overlap each other.

The invention is not limited to the embodiments described above which may be varied widely within the scope of the invention as defined by the appending claims.

## Claims

1. Apparatus for removing leaves from the stems of cut flowers, comprising a conveyor belt having a conveying direction for conveying the cut flowers in a position in which the stems extend transversely beyond the conveyor belt, and deleafing means positioned next to the conveyor belt for engaging the stems for removing the leaves there from, which deleafing means comprise deleafing members moving along endless tracks in first planes extending substantially perpendicularly to a second plane defined by the conveyor belt and the stems of the cut flowers, **characterized in that**, as seen in a direction perpendicularly to the second plane, the angle between said first planes and the stems lies in a range from 0° to 20°.

2. Apparatus according to claim 1, wherein said angle lies in a range from 10° to 20°.

3. Apparatus according to claim 1, wherein said angle lies in a range from 0° to 10°.

4. Apparatus according to claim 1, wherein said angle is substantially zero.

5. Apparatus according to claim 1, wherein said angle is such that the component in the conveying direction of the deleafing force which is generated on the stems by the deleafing members and which extends in said first planes substantially is compensated by a drag force on the stems generated by the deleafing members due to the movement of the stems relative to the deleafing members in the conveying direction of the conveyor belt.

6. Apparatus according to any of the previous claims, wherein the conveyor belt extends horizontally, wherein the stems of the cut flowers extend horizontally and wherein said first planes extend vertically.

7. Apparatus according to any of the previous claims and devised for conveying the cut flowers with the stems extending substantially perpendicularly to the conveying direction of the conveyor belt.

8. Apparatus according to any of the previous claims, wherein the deleafing means comprise at least one pair of counter rotating shafts which carry the deleafing members for engaging the stems.

9. Apparatus according to claim 8, comprising two or more adjacent pairs of counter rotating shafts.

10. Apparatus according to any of the claims 1-7, wherein the deleafing means comprise at least one pair of counter rotating belts each defining an elongated track and carrying the deleafing members for engaging the stems.

11. Apparatus according to any of the claims 8-10, wherein the deleafing members are brushes.

12. Apparatus according to any of the claims 8-10, wherein the deleafing members are flexible fingers.

13. Apparatus according to any of the claims 8-12, wherein the shafts or elongated tracks extend in parallel to each other.

14. Apparatus according to any of the claims 8-12, wherein the shafts or elongated tracks, as seen in a horizontal direction perpendicularly to the conveying direction of the conveyor belt, include an angle in a range from 5° to 15°.

15. Apparatus according to claim 14, wherein said angle is at most 10°.

16. Apparatus according to any of the previous claims, wherein the deleafing means are movable to and fro in a direction substantially in parallel to the stems.

17. Apparatus according to claim 16, wherein the deleafing means are movable to and fro along a guide.

18. Apparatus according to claim 16, wherein the deleafing means are movable to and fro by means of a four-link mechanism, such as for example a parallelogram linkage.
